# EUROPEAN PATENT SPECIFICATION

(11) **EP 1 160 204 B1**
(45) Date of publication and mention of the grant of the patent: **11.07.2007**
(21) Application number: 01304176.9
(22) Date of filing: 09.05.2001
(51) Int. Cl.: C02F 1/42, B01J 49/00

(54) **Water treatment**
Wasseraufbereitung
Traitement de l'eau

(30) Priority: 09.05.2000 GB 0011167
(43) Date of publication of application: 05.12.2001
(73) Proprietor: Harvey Softeners Limited, Surrey GU22 9LQ (GB)
(72) Inventor: Howse, Goffrey, Old Woking, Surrey GU22 9LQ (GB); Bowden, Harvey, Old Woking, Surrey GU22 9LQ (GB)
(74) Representative: Symons, Rupert Jonathan

(56) References cited:
- EP-A- 0 731 061
- US-A- 3 509 998
- US-A- 4 693 814
- US-A- 5 589 058

## Description

This invention relates to water treatment, specifically apparatus comprising a treatment component which has to be rendered inoperable to treat water at intervals, for example so that the component can be regenerated and a corresponding method.

More particularly, but not exclusively, the invention relates to a water softener comprising an active resin water softening component that has to be regenerated occasionally by passing brine through it. Whilst the component is being regenerated it is inoperable to supply softened water. In known domestic water softeners, this problem is ameliorated by arranging for regeneration to take place at a time of likely low demand, for example during the very early morning. Also known are water softeners comprising two softening components which are regenerated during respective different time intervals so that at least one of them is operable all the time, for example as disclosed in US Patent No. 5,273,070. The apparatus according to this patent comprises an electrically motorised valve arrangement controlled by a microprocessor which is programmed to sequence the operations of the valve arrangement. However, this requires an electrical supply to the water softener which, in some cases, may be inconvenient and/or which may add to the cost of installation of the softener.

US Patent No. 5,681,454 discloses water treatment apparatus having several water treatment components all but one of which are coupled to respective pressure-controlled valves. The apparatus is intended for use where the demand for treated water may vary, e.g. because different numbers of consumers are using it at any one time, but where each component is most efficient over a particular range of throughput. Accordingly, the valves operate to bring different numbers of the components into operation depending on the demand level. Pressure operated valves are used so as to avoid the need for electronic metering.

US Patent No. 4,693,814 discloses a water treatment system having a pair of tanks, which tanks are arranged to operate, and be regenerated sequentially. The flow of water into the or from each tank is controlled by the flow of water through a valve.

US Patent No. 3,509,998 discloses an automatic water softening system having a pair of tanks and a water driven valve which controls the flow of a predetermined quantity of water through a first of the two tanks with the second tank isolated. The system automatically initiates a switch of the water supply from the first tank to the second tank after the predetermined quantity of water has flowed through the first tank.

According to the invention, in one aspect, there is provided a water treatment apparatus comprising a water inlet, two water treatment tanks and valve means for isolating said water inlet from said two water treatment tanks at respective different intervals so that at least one tank is connected to said water inlet at all times, said valve means comprising water-flow driven valve means, said apparatus including a water driven flow-meter for controlling said valve means, characterised in that the valve means comprises a service position to permit, when in use, water to flow into said two water treatment tanks simultaneously.

The apparatus may be operable as a water softener and said two tanks containing ion exchange resin, the meter being arranged to compel said valve means to service positions which initiate alternate regeneration of the resin in the respective tanks by enabling the flow of brine through the resin being regenerated.

The meter may comprise a movable actuator member arranged for cyclic movement in response to the flow of a predetermined quantity of water supplied by the water softener, said actuator member being arranged to actuate two valves at respective different positions in its cycle of movement, said two valves being arranged to enable said flow of brine when so actuated.

A further aspect of the invention provides a method of treating water using the water treatment apparatus disclosed above, the method comprising rendering inoperable each of the two tanks through which water flows at respective different intervals using the valve means so that at least one component is operable all the time, and using the flow of water through the flow meter to control said valve means, the method being characterised by rendering both of said tanks operable in parallel for a period.

For a better understanding of the invention, reference will now be made, by way of example, to the accompanying drawings, in which:
Figure 1 is a simplified diagram showing the components of a water softener and the connections therebetween;
Figures 2 and 3 are two diagrams for explaining the construction and operation of a shuttle valve used in the Figure 1 water softener;
Figures 4 and 5 are two diagrams for explaining the construction and operation of a service meter used in the Figure 1 softener;
Figures 6 and 7 are two diagrams for explaining the construction and operation of a regeneration meter used in the Figure 1 softener;
Figures 8 and 9 are two diagrams for explaining the construction and operation of a brine tank and valve used in the Figure 1 water softener; and
Figures 10 and 11 are two diagrams for explaining the construction and operation of a modified brine tank and valve as shown in Figures 8 and 9, for use in the water softener of Figure 1.

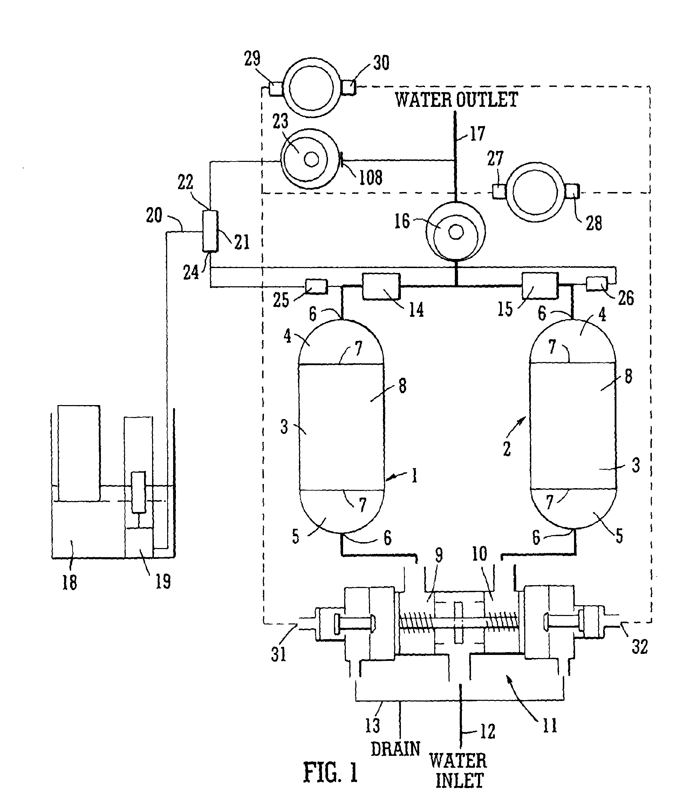

The water softener of Figure 1 comprises two resin tanks 1 and 2. Each tank has a cylindrical central portion 3 and two dome-shaped ends 4 and 5 with, at the centre, a water entry/exit port 6. The tank is formed in two halves each comprising a dome-shaped end 4 or 5 and half of the cylindrical portion 3. The two halves of the tank are then butt-welded together, i.e. around the centre of the tank. Before this, however, two stainless steel mesh screens 7 are welded into the interior of each half of the tank so that they will separate the dome shaped ends 4 and 5 from the cylindrical portion 3, and this cylindrical portion 3 is filled with the ion exchange resin 8. In use of the water softener, the tanks are positioned upright as shown with water flowing upwards from the port 6 in the lower end 5 of the tank, through the resin 8 and then out of the port 6 in the upper end 4 of the tank when the resin is supplying softened water while, for regeneration, salt water (brine) flows down via port 6 in the upper end 4, through the resin 8, and out of the tank through the port 6 in its lower end.

The ports 6 at the lower ends 5 of the tanks 1 and 2 are connected via respective pipes to respective ones of two chambers 9 and 10 in a shuttle valve 11 to be described later. The valve 11 also has a connection 12 from the supply of water to the softened, e.g. the water mains, and connections 13 to a drain.

The ports 6 at the upper ends 4 of the tanks 1 and 2 are connected via respective check valves 14 and 15 to a common input of a service meter 16 to be described. An output of this meter leads via pipe 17 to the softened water outlet of the softener. This pipe will be connected in use via a union (not shown) to the user's domestic stored water system (not shown).

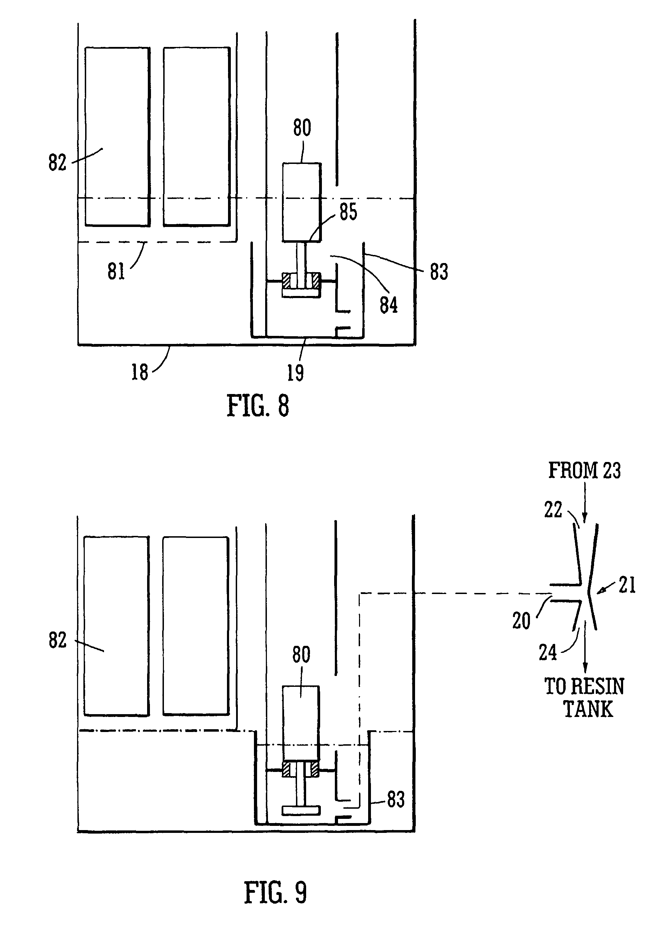

The softener also comprises a brine tank 18 and brine valve 19 connected to an injection input 20 of an injector 21 which also has an input port 22 connected via a regeneration meter 23 to the softened water outlet pipe 17, there being a fine debris blocking screen 108 fitted at that side of the meter 23 which is nearest the pipe 17. An outlet port 24 of the injector 21 leads via respective further check valves 25 and 26 to the ports 6 at the upper ends of the tanks 1 and 2, i.e. so that the port 6 at the top of tank 1 is connected to both check valves 14 and 25 while port 6 at the top of tank 2 is connected to check valves 15 and 26. As shown in Figure 9, the injector 21 comprises a duct between the input and output ports 22 and 24 which duct is shaped to provide a restriction and hence a pressure drop when water is flowing through it from the meter 23. This causes brine from the tank 18 to be sucked into the injector 21 and mixed with the softened water flowing through the injector 21 and exiting from the outlet port 24.

The service meter 16 is arranged to operate two service valves 27 and 28 while the regeneration meter 23 is similarly coupled to two regeneration valves 29 and 30. The valves 27, 28, 29 and 30 are in turn operable to control the shuttle valve 11. The valve 11 has two control ports 31 and 32. The valve 11 is a servo-valve and its operation is governed by the pressure of water at its two control ports 31 and 32. One port 31 is connected via a suitable conduit, e.g. a relatively narrow bore tube, to an output of the service valve 27 and to an output of the regeneration valve 29. Meanwhile, the other control port 32 of shuttle valve 11 is connected via a suitable conduit to an output of the service valve 28 and an output of the regeneration valve 30.

The service meter 16 measures the flow of softened water supplied by the water softener. The meter operates the service valves 27 and 28 so that each time a predetermined quantity of softened water has been supplied, regeneration of one of the tanks is started. Similarly, during regeneration, the regeneration meter 23 operates via regeneration valves 29 and 30 to set a predetermined quantity of water to pass through the tank being regenerated. During regeneration, brine from tank 18 is mixed with this water for a time (controlled by the brine valve 19).

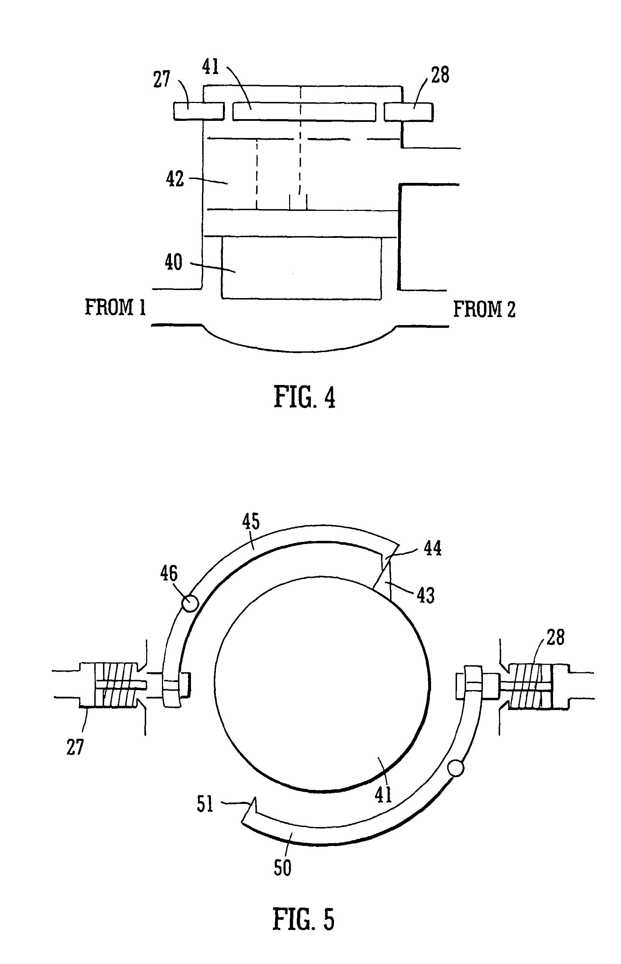

As shown in Figures 4 and 5, softened water from both tanks 1 or 2 enters the meter 16 and passes through the metering chamber 40. This metering chamber 40 contains a piston type water meter which measures accurately the volume of water passing through to the outlet pipe 17. The metering chamber 40 drives the service meter cam 41 via a series of gears 42. One rotation of the service meter cam 41 is equivalent to the pre-set volume of water that may be softened by both resin tanks.
As the service meter cam 41 rotates anticlockwise, the blade 43 on the service cam 41 pushes a blade 44 on the service lever 45 so that the lever 45 moves about the pivot 46 which levers open the service valve 27 enabling a water pressure signal to flow from the meter to the shuttle valve port 29.

As softened water continue to flow through the meter 16 the blade 44 wipes past the lever blade 43 and closes the service meter valve 27, 'locking in' the water pressure to the shuttle valve port 31. The volume of water required to wipe the blades past each other is less than the pre-set volume of water required to regenerate a resin tank.

Service lever 45 operates service valve 27 and starts the regeneration of resin tank 1. Similarly, service lever 50 with blade 51 operates service valve 28 and applies a pressure signal to shuttle valve port 32 to start the regeneration of resin tank 2. The lever blades 44 and 51 are positioned at 180° to each other, therefore, the regeneration of either tank is 50% of the pre-set volume of one rotation of the service meter cam 41. The pre-set volume may be altered by changing the ratio of the gear chain between the meter chamber 40 and the service cam 41.

The regeneration meter 23 measures the pre-set volume of softened water necessary to regenerate either resin tank 1 or 2. After the pre-set volume of regeneration water has passed through the meter 23 it stops the regeneration.

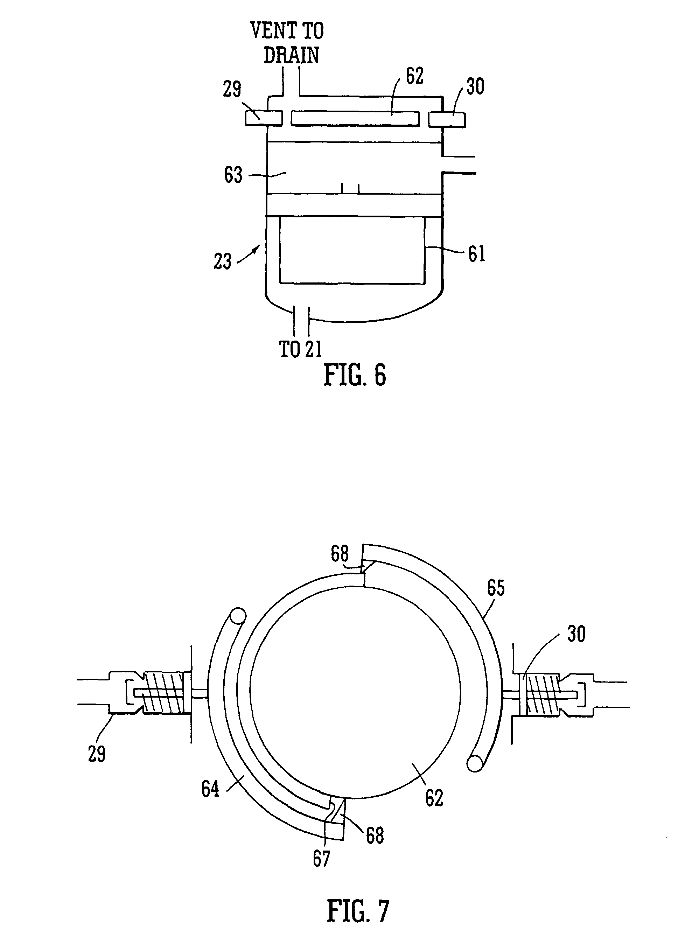

As shown in Figures 6 and 7, softened water enters the metering chamber 61 of the regeneration meter 23 and flows through the metering chamber 61. This chamber again contains a piston type water meter which accurately measures the volume of water passing through the meter chamber 61. The meter chamber 61 drives the regeneration cam 62 via a series of gears 63. Half a rotation of the regeneration meter cam 62 is equivalent to the pre-set volume of water necessary to regenerate one resin tank.

At the start of the regeneration of resin tank 1 the regeneration meter cam 62 is positioned so that regeneration lever 64 is 'free' and therefore regeneration valve 29 is closed. This 'locks in' the pressure signal from the service valve 27 which opens drain shuttle valve port 31. The regeneration meter cam 62 has pushed open the regeneration valve 30 via lever 65, this prevents resin tank 2 from regenerating at the same time as resin tank 1 by venting any pressure signal to drain shuttle valve port 32.

As regeneration water passes through the regeneration meter 23 the cam 62 rotates anticlockwise until, at the end of the regeneration, the lever blade 68 on lever 65 drops off the rear step of the cam 62. Lever 65 is now 'free' to let the spring close valve 30. The cam 62 continues to rotate anticlockwise. The front step 67 of the cam 62 pushes the blade 68 on lever 64 which opens valve 29. Opening valve 29 vents to drain the water pressure holding open drain shuttle valve port 31 so that the drain shuttle 31 then closes.

Regeneration lever 64 operates regeneration valve 29 and stops the regeneration of resin tank 1. Regeneration lever 65 operates regeneration valve 30 and stops the regeneration of resin tank 2. The lever blades are positioned at 180 degrees to each other, therefore the volume of regeneration water for each tank is 50% of the pre-set water volume necessary to rotate the regeneration cam once. The pre-set volume may be altered by changing the gear ratio between the meter chamber and the regeneration cam.

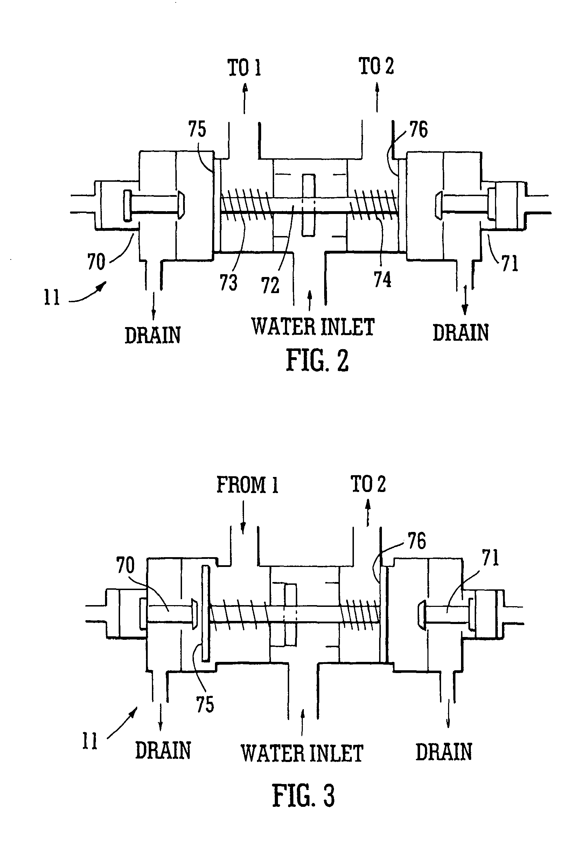

Referring to Figures 2 and 3, the shuttle valve 11 distributes inlet water equally between resin tanks 1 and 2 when both tanks are in service, and diverts hard water to either resin tank 1 or 2 during regeneration. It also enables regeneration water from either resin tank 1 or 2 to flow to drain.

In the service position hard water flows through the valve 11 to both resin tanks 1 and 2. Drain shuttles 70 and 71 are held closed. The shuttle valve 11 comprises a housing defining chambers connected to the respective resin tanks. A shuttle 72 is mounted in the housing. it comprises a spindle with two pistons 75 and 76 at its ends and a central valve member. The shuttle 72 is held in a central position by the springs 73 and 74 which are of equal strength and oppose each other.

The regeneration of resin tank 1 is started by a water pressure signal from the service valve 27 which opens drain shuttle 70. The path of water to flow to drain is now open, the flow of water to drain now pushing across piston 75 and closing the valve seal on its seat: Hard water can only now flow to resin tank 1 for softening. The regeneration water now flows from resin tank 1 past piston 75 through the open drain shuttle and then to drain.

When regeneration valve 29 opens the water pressure signal opening drain shuttle 70 is vented to draw in allowing water pressure to push drain shuttle 70 back to the closed position, this equalises the water pressure in resin tanks 1 and 2 enabling the shuttle to return to a central service position, hard water again now flows to both resin tanks, that is the shuttle valve 11 has returned to its service position.

The regeneration of resin tank 2 is the same operation but uses drain shuttle 71 and piston 76 etc.

As shown in Figures 8 and 9, softened water fills the brine tank 18 via the brine valve 19 until shut off by the brine valve float 80 to a level above the platform 81. The salt 82 is gradually dissolved in the water producing brine.

During the regeneration of a resin tank (1, 2) softened water flows through the injector 21 from the inlet 22 to the outlet 24 producing a partial vacuum at the suction point in the injector 21 which draws brine from the brine tank 18 as shown. The brine is mixed with the water flowing through the injector 21 which then flows to the resin tank (1, 2) in regeneration.

Brine continues to be sucked from the brine tank 18 until the brine level stops filling when it reaches the height of the walls of a cup-shaped weir 83. The level continues to fall in the weir chamber 84 until it reaches a point which enables the upper seat 85 to check shut and no more brine is sucked from the brine tank 18. Water continues to flow through the injector 22 to flush any brine to drain from the resin tank.
When the softener returns to the service position the brine tank 18 again refills with water until shut off by the brine valve float 80.

The amount of brine being capable of being sucked from the brine tank 18 may be adjusted by raising or lowering the brine valve 80 relative to the weir 83. This raises or lowers the shut off point of the water refilling the brine tank 18, thus adjusting the volume of brine.

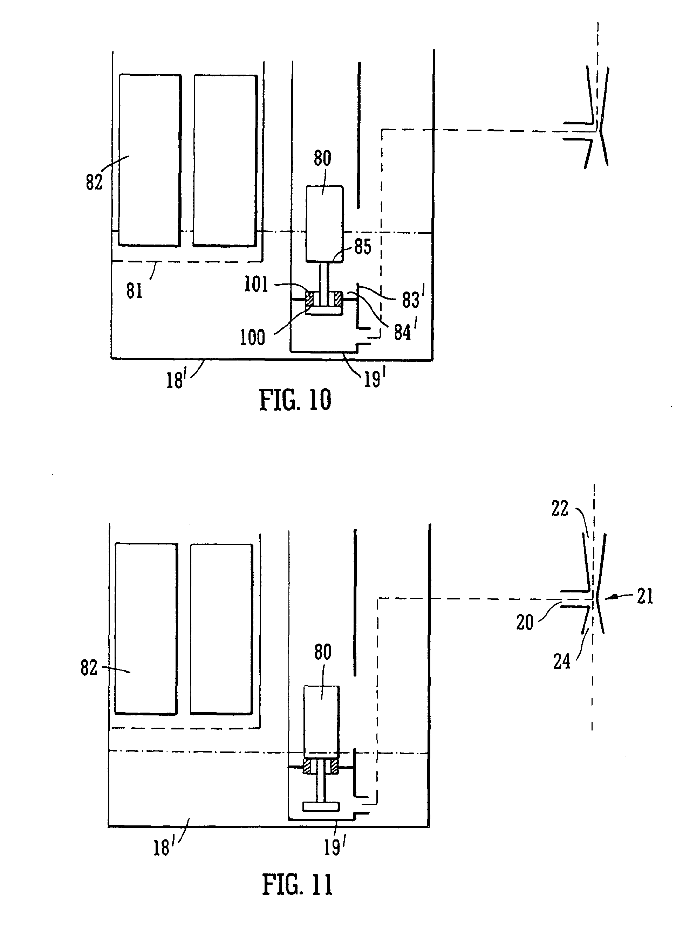

Various modifications may be made to the described apparatus. For example, the weir 83 is optional. Alternative means may be provided for adjustment of the water shut-off point or this point could be fixed rather than adjustable. A possible modification is that shown in Figures 10 and 11, in which identical numbers have been used for identical parts.

In the brine tank 18 and brine valve 19 of Figures 10 and 11, the weir 83 has been removed. In operation of the apparatus, softened water fills the brine tank 18 via the brine valve 19 until the flow is shut off by the lower seat 100 of the float 80 abutting the seal 101. The salt 82 is dissolved in the water to form brine.

As before, during regeneration of a resin tank 1, 2, softened water flows through the injector 22 from the inlet 22 to the outlet 24, thereby producing a partial vacuum on the suction port which draws brine from the tank 18. The so-drawn brine is mixed with the water flowing through the injector 22 which then flows to the respective resin tank 1, 2 in a regenerative capacity.

Brine continues to be drawn from the tank 18 until the level of brine reaches the height of the weir 83'. The level continues to fall in the weir chamber 84' until the level is such that the upper seat 85 engages or abuts the seal 101. At this point no more brine is drawn from the tank 18 although water continues to flow through the injector 22 to flush any remaining brine therefrom.

When the apparatus returns to the service position the brine tank 18 again fills with water until shut off by the brine valve float 80.

### REGENERATION OF TANK 1

After a predetermined volume of water has passed through the softener as recorded by the service meter 16, service valve 27 opens and a pressure water signal is delivered to drain shuttle 70, opening it. The open drain shuttle 70 opens a path for water to flow to the drain. Water in chamber 9 pushes the shuttle 72 across, as shown in Figure 3, stopping hard water flow to resin tank 1. All hard water flow is directed to resin tank 2 which softens all the water now passing through the softener. Soft water flows via the regeneration meter to the injector 21 which sucks brine from the brine tank via the brine valve. The brine solution passes through the regeneration check valve 25 and into the top of resin tank 1. Service check valve 14 closes, stopping softened water from resin tank 2 from entering resin tank 1. The brine solution flows down through resin tank 1 and regenerates the cation ion exchange resin in the resin tank. The brine solution then passes through chamber 9 and then to drain.

### REGENERATION OF TANK 2

After a predetermined volume of water has passed through the softener as recorded by the service meter 16, service valve 28 opens and a pressure water signal is directed to drain shuttle 71, opening it. The open drain shuttle 71 opens a path for water to flow to the drain. Water in chamber 70 pushes the shuttle 72 across as shown in Figure 1, stopping hard water flow to resin tank 1. All hard water flow is directed to resin tank 1 which softens all the water now passing through the softener. Soft water flows via the regeneration meter 23 to the injector 21 which sucks brine from the brine tank via the brine valve. The brine solution passes through the regeneration check valve 26 and into the top of resin tank 2. Service check valve 15 closes, stopping softened water from resin tank 1 from entering resin tank 2. The brine solution flows down through resin tank 1 and regenerates the cation ion exchange resin in the resin tank. The brine solution then passes through chamber 10 and then to drain.

## Claims

1. Water treatment apparatus comprising a water inlet (12), two water treatment tanks (1, 2) and valve means for isolating said water inlet (12) from said two water treatment tanks at respective different intervals so that at least one tank (1, 2) is connected to said water inlet (12) at all times, said valve means comprising water-flow driven valve means, said apparatus including a water driven flow-meter (16) for controlling said valve means, **characterised in that** the valve means comprises a service position to permit, when in use, water to flow into said two water treatment tanks (1, 2) simultaneously.

2. Apparatus according to Claim 1, operable as a water softener and said two tanks (1, 2) containing ion exchange resin (8), the meter (16) being arranged to compel said valve means to service positions which initiate alternate regeneration of the resin in the respective tanks (1, 2) by enabling the flow of brine through the resin (8) being regenerated.

3. Apparatus according to Claim 2, wherein the meter (16) comprises a movable actuator member (41) arranged for cyclic movement in response to the flow of a predetermined quantity of water supplied by the water softener, said actuator member (41) being arranged to actuate two valves (29, 30) at respective different positions in its cycle of movement, said two valves (29, 30) being arranged to enable said flow of brine when so actuated.

4. A method of treating water using a water treatment apparatus according to any preceding Claim, the method comprising rendering inoperable each of the two tanks at respective different intervals using the valve means so that at least one tank is operable all the time and using the flow of water through the flow meter to control said valve means, the method being **characterised by** rendering both of said tanks operable in parallel for a predetermined period.

## Patentansprüche

1. Vorrichtung zur Wasseraufbereitung, umfassend einen Wassereinlass (12), zwei Wasseraufbereitungstanks (1, 2) und Ventilmittel zum Trennen des besagten Wassereinlasses (12) von den besagten zwei Wasseraufbereitungstanks in jeweils unterschiedlichen Intervallen, so dass immer mindestens ein Tank (1, 2) mit dem besagten Wassereinlass (12) verbunden ist, wobei die Ventilmittel Wasserstrom betriebene Ventilmittel umfassen, wobei die besagte Vorrichtung ein wasserbetriebenes Durchflussmessgerät (16) zur Steuerung besagter Ventilmittel aufweist, **dadurch gekennzeichnet, dass** das Ventilmittel eine Serviceposition umfasst, damit bei Aktivierung gleichzeitig Wasser in die besagten zwei Wasseraufbereitungstanks (1, 2) fließen kann.

2. Vorrichtung nach Anspruch 1, das als Wasserenthärter betrieben werden kann, wobei die besagten zwei Tanks (1, 2) ein Ionenaustauschharz (8) enthalten und das Messgerät (16) so angeordnet ist, dass es die besagten Ventilmittel in die Servicepositionen zwingt, welche die abwechselnde Regeneration des Harzes in den jeweiligen Tanks (1, 2) einleiten, indem sie den Durchfluss von Salzwasser durch das Harz (8), das regeneriert wird, ermöglichen.

3. Vorrichtung nach Anspruch 2, wobei das Messgerät (16) ein bewegliches Auslöserelement (41) umfasst, das für zyklische Bewegung angeordnet ist, als Reaktion auf den Durchfluss einer vorab festgelegten Wassermenge, die vom Wasserenthärter geliefert wird, wobei das besagte Auslöserelement (41) so angeordnet ist, dass es in seinem Bewegungszyklus zwei Ventile (29, 30) in jeweils verschiedenen Positionen auslöst, wobei die besagten zwei Ventile (29, 30) so angeordnet sind, dass sie bei entsprechender Auslösung besagten Durchfluss von Salzwasser ermöglichen.

4. Verfahren zur Wasseraufbereitung unter Verwendung einer Vorrichtung zur Wasseraufbereitung nach einem der vorhergehenden Ansprüche, wobei das Verfahren das Außer-Betrieb-Setzen jedes der zwei Tanks in jeweils unterschiedlichen Intervallen mithilfe der Ventilmittel umfasst, so dass mindestens ein Tank immer betriebsbereit ist, und mithilfe des Durchflusses von Wasser durch das Durchflussmessgerät, um besagte Ventilmittel zu steuern, wobei das Verfahren **dadurch gekennzeichnet ist, dass** es die beiden besagten Tanks für einen vorab festgelegten Zeitraum parallel in Betrieb nimmt.

## Revendications

1. - Appareil de traitement de l'eau comprenant une arrivée d'eau (12), deux réservoir de traitement de l'eau (1, 2) et des moyens formant soupape destinés à isoler ladite arrivée d'eau (12) desdits deux réservoirs de traitement de l'eau à différents intervalles respectifs de sorte qu'au moins un réservoir (1, 2) est connecté à ladite arrivée d'eau (12) à tous moments, lesdits moyens formant soupape comprenant des moyens formant soupape entraînés par l'écoulement d'eau, ledit appareil comportant un débitmètre (16) entraîné par l'eau destiné à commander lesdits moyens formant soupape, **caractérisé en ce que** les moyens formant soupape comprennent une position de fonctionnement pour autoriser, lorsqu'ils sont utilisés, l'écoulement de l'eau à l'intérieur desdits deux réservoirs de traitement d'eau (1, 2) simultanément.

2. - Appareil selon la revendication 1, pouvant fonctionner comme un adoucisseur d'eau et lesdits deux réservoirs (1, 2) contenant une résine échangeuse d'ions (8), le débitmètre (16) étant agencé pour obliger lesdits moyens formant soupape à occuper les positions de fonctionnement qui initient la régénération alternée de la résine dans les réservoirs (1, 2) respectifs en autorisant l'écoulement de saumure travers la résine (8) en train de se régénérer.

3. - Appareil selon la revendication 2, dans lequel le débitmètre (16) comprend un élément d'actionnement mobile (41) agencé pour effectuer un déplacement cyclique en réponse à l'écoulement d'une quantité d'eau prédéterminée amenée par l'adoucisseur d'eau, ledit élément d'actionnement (41) étant agencé pour actionner deux soupapes (29, 30) dans différents positions respectives au cours de son cycle de déplacement, lesdites deux soupapes (29, 30) étant agencées pour autoriser ledit écoulement de saumure lorsqu'elles sont actionnées ainsi.

4. - Procédé de traitement de l'eau utilisant un appareil de traitement de l'eau selon l'une quelconque des revendications précédentes, le procédé comprenant le fait de rendre inexploitable chacun des deux réservoirs à différents intervalles respectifs en utilisant les moyens formant soupape de sorte qu'au moins un réservoir est exploitable en permanence et d'utiliser l'écoulement d'eau à travers le débitmètre pour commander lesdits moyens formant soupape, le procédé étant **caractérisé en ce qu'**il rend les deux réservoirs opérables en parallèle pendant une période prédéterminée.
